Europäisches Patentamt

European Patent Office

Office européen des brevets

(11) Veröffentlichungsnummer: **0 264 581**
**A1**

## (12) EUROPÄISCHE PATENTANMELDUNG

(21) Anmeldenummer: 87112397.2

(22) Anmeldetag: 26.08.87

(51) Int. Cl.4: **B01D 53/18 , B01D 3/00**

(30) Priorität: 02.10.86 CH 3936/86

(43) Veröffentlichungstag der Anmeldung:
27.04.88 Patentblatt 88/17

(84) Benannte Vertragsstaaten:
BE DE FR GB IT NL SE

(71) Anmelder: GEBRÜDER SULZER
AKTIENGESELLSCHAFT
Zürcherstrasse 9
CH-8401 Winterthur(CH)

(72) Erfinder: Zuiderweg, Frederik Johannes,
Prof.Dr.
Leeuweriklaan 141
NL-1403 CP Bussum(NL)

(74) Vertreter: Dipl.-Ing. H. Marsch Dipl.-Ing. K.
Sparing Dipl.-Phys.Dr. W.H. Röhl
Patentanwälte
Rethelstrasse 123
D-4000 Düsseldorf(DE)

(54) Vorrichtung zur Flüssigkeitsverteilung für Stoff- und Wärmeaustauschkolonnen.

(57) Die Vorrichtung zur Flüssigkeitsverteilung in einer Stoff-und Wärmeaustauschkolonne (1) besteht aus einem Vorverteiler (3) mit einer begrenzten Anzahl von Flüssigkeitsaufgabestellen (4) und einem Feinverteiler (5). Dieser Feinverteiler weist eine Anzahl von aufeinander geschichteten, jeweils um 90° gegeneinander verdrehten Packungskörpern mit geordneter Struktur auf und bewirkt eine Auffächerung der aufgegebenen Flüssigkeit in eine Vielzahl von über den Kolonnenquerschnitt gleichmässig verteilten Teilströmen.

FIG. 1

## Vorrichtung zur Flüssigkeitsverteilung für Stoff-und Wärmeaustauschkolonnen.

Die Erfindung betrifft einen Flüssigkeitsverteiler für Stoff-und Wärmeaustauschkolonnen gemäss Oberbegriff von Anspruch 1.

Flüssigkeitsverteiler bezwecken eine gleichmässige Verteilung der Flüssigkeit über den Querschnitt derartiger Kolonnen.

Gebräuchliche Typen solcher Kolonnen, auf welche die Erfindung vorteilhaft Anwendung finden kann, sind insbesondere Kolonnen, bei denen die Austauschabschnitte aus geordneten Packungskörpern, z.B. aus geriffelten, lamellenartigen Elementen, bestehen. Jedoch kann die Erfindung auch bei solchen Kolonnen verwendet werden, in denen die Austauschabschnitte aus regellosen Schüttungen von Füllkörpern, beispielsweise Raschigringen, bestehen.

In derartigen Kolonnen kann z.B. eine Destillation, Rektifikation, Extraktion, Absorption, auch eine Abtrennung isotoper Elemente aus einem Stoff aufgrund einer chemischen Austauschreaktion wie auch ein Wärmeaustausch zwischen einer Flüssigkeit und einem dampf-bzw. gasförmigen Medium durchgeführt werden.

Bekanntlich hängt die Wirkung, in den erstgenannten Fällen die Trennwirkung und im letztgenannten Fall die Wärmeübertragung wesentlich von einer gleichmässigen und feinen Verteilung der Flüssigkeit auf die Oberfläche eines Austauschabschnittes ab.

Von der grossen Anzahl von Flüssigkeitsverteilern werden nachstehend einige bekannte und häufig angewendete Typen erwähnt.

So besteht beispielsweise eine bekannte Ausführungsform darin, Flüssigkeitsverteiler als Loch-oder Siebböden mit einer grossen Anzahl von gleichmässig angeordneten Lochungen oder Lochtüllen mit Ueberlaufsystemen auszubilden.

Eine weitere gebräuchliche Ausführungsform besteht darin, Flüssigkeitsverteiler als Rinnen-oder Kastenverteiler auszubilden, die Schlitze oder V-förmige Einschnitte in den Seitenwänden für den Flüssigkeitsüberlauf bzw. Kapillarsysteme aufweisen.

Eine weitere bekannte Ausführungsform besteht darin, Flüssigkeitsverteiler als sogenannte Kasten-oder Rohrverteiler mit Lochungen an der Unterseite für den Flüssigkeitsablauf auszubilden.

Mit den bekannten Vorrichtungen kann wegen der vielen nötigen Abtropfstellen nur unter einem unwirtschaftlich hohen konstruktiven Aufwand eine einigermassen gleich mässige Flüssigkeitsverteilung erreicht werden. Wird jedoch die Gleichmässigkeit des Flüssigkeitsflusses nicht im erforderlichen Masse erreicht, führt dieses im Austauschteil der Kolonne zur sogenannten Maldistribution, welche den Stoff-bzw. Wärmeaustausch reduziert. Maldistribution und ihre Folgen sind z.B. in der EP-PS 0 118 029 ausführlich erläutert.

Ein weiterer Nachteil besteht darin, dass bei den für eine feine Verteilung nötigen vielen Abtropfstellen kleine Lochdurchmesser auftreten. Die Gefahr der Verstopfung durch Verunreinigungen, die in der Prozessflüssigkeit enthalten sein können, ist deshalb sehr gross. Dies führt wieder zu einer Maldistribution mit ihren Folgen.

Gegenüber den bekannten Vorrichtungen hat sich die Erfindung die Ausbildung eines Flüssigkeitsverteilers zum Ziel gesetzt, welcher ausser einer preisgünstigen Herstellungsweise, eine feine und gleichmässige Flüssigkeitsverteilung über den Kolonnenquerschnitt ermöglicht.

Diese Aufgabe wird erfindungsgemäss durch die im Kennzeichen des Anspruchs 1 angegebenen Merkmale gelöst.

Vorteilhafte Weiterbildungen bzw. Ausführungsformen der Erfindung sind im Kennzeichen der Ansprüche 2 bis 11 angegeben.

Erfindungsgemäss ausgebildete Vorrichtungen zur Flüssigkeitsverteilung sind baulich einfach und tragen zu einer hohen Trennleistung bzw. optimalen Wärmeübertragung in Kolonnen wesentlich bei.

Bei der erfindungsgemässen Kombination können zur Vorverteilung und Aufgabe der Flüssigkeit Flüssigkeitsverteiler bekannter Bauart eingesetzt werden. In diesem Fall be nötigen jedoch diese gegenüber den bekannten Vorrichtungen wesentlich weniger Flüssigkeitsaustritte, so dass einfache Konstruktionen verwendet werden können.

Da die Querschnitte der Flüssigkeitsaustritte relativ gross ausgeführt sein können, wird eine Verstopfung durch Verschmutzungen verhindert.

Ausserdem wird wegen der grösseren Flüssigkeitsmengen pro Teilstrom ein Versprühen der Flüssigkeit durch aufsteigendes Gas oder Dampf vermieden, derart, dass vom Gas oder Dampf keine Flüssigkeit zum gas-bzw. dampfseitigen Ausgang der Kolonne mitgerissen wird.

Vorteilhaft werden im Austauschteil der Kolonne die Füllkörper aus Packungskörpern mit einer geordneten Struktur ausgebildet, wie sie für den Stoff-bzw. Wärmeaustausch in Kolonnen verwendet werden. Solche Strukturen sind beispielsweise aus den CH-PS 608 380 und 653 909 bekannt. Jedoch umfasst die Erfindung auch andere Ausführungsformen von aus Packungskörpern mit einer geordneten Struktur gebildeten Füllkörpern.

Beim Einsatz der bekannten Packungskörper im Austauschteil von Kolonnen werden insbesondere die grossen Oberflächen, die gute Benetzung und der relativ geringe Druckabfall für einen wirksamen Stoff-bzw. Wärmeaustausch ausgenutzt. Jedoch ist es, wie an vorstehender Stelle angegeben, zusätzlich erforderlich, die flüssige Phase auf dem obersten Querschnitt des Austauschteils in einer möglichst gleichmässigen und feinen Verteilung aufzugeben, um von vornherein gute Austauscheigenschaften zu erzielen und das Auftreten einer Maldistribution auszuschliessen.

Eine Aufspaltung der Flüssigkeitsströme in Teilströme grosser Anzahl wird erfindungsgemäss in der unter dem Flüssigkeitsverteiler angeordneten Schicht von geschütteten Füllkörpern oder geordneten Packungskörpern herbeigeführt. Somit wirkt diese Schicht als Feinverteiler für die Flüssigkeit.

Als überraschende Wirkung wurde bei der Erfindung erkannt, dass, wenn ein einzelner Flüssigkeitsstrom auf die Oberseite einer Füllkörperschicht, insbesondere einer Schicht aus Packungskörpern mit einer geordneten Struktur, wie sie beispielsweise aus der CH-PS 608 380 bekannt sind, aufgegeben wird, mindestens der grösste Teil zwischen zwei benachbarten Lamellen eintritt und sich in zwei Teilströme aufteilt. Der eine Teilstrom fliesst über die Oberfläche der einen Lamelle nach unten und der andere Teilstrom über die Oberfläche der benachbarten Lamelle. Wenn sich die die Strömungskanäle bildenden Riffelungen von benachbarten Lamellen kreuzen, treten die beiden Flüssigkeitsströme an der unteren Seite je nach Höhe und Neigungswinkel der Riffelungen gegen die vertikale Achse, in einem unter Umständen beträchtlichen Abstand aus, wie experimentell bestätigt werden kann.

Die Hauptströmungsrichtung der beiden Teilströme entspricht im wesentlichen der Richtung der Fallinien in der Lamellenebene. Der Abstand der Schwerpunkte der beiden austretenden Flüssigkeitsströme ergibt sich somit aus dem Abstand der Fallinien am unteren Ende des Packungskörpers.

Schliesst man an einen solchen Packungskörper einen weiteren Packungskörper an, wobei der zweite Packungskörper gegenüber dem ersten Packungskörper um einen Winkel von 90° verdreht ist, so spalten sich die beiden aus dem ersten Packungskörper resultierenden Ströme in dem zweiten Packungskörper wieder in je zwei weitere Teilströme auf, so dass am Austritt des zweiten Packungskörpers insgesamt vier Ströme vorhanden sind. Schliesst man weitere Packungskörper nach unten an, so setzt sich der Prozess der Stromaufspaltung weiter fort. Es entsteht somit innerhalb der geschichteten Packungskörper eine Selbstverteilung der Flüssigkeit über den gesamten Kolonnenquerschnitt. In einem Austauschteil mit geordneten Packungskörpern kann abhängig von der Bemessung der geriffelten Lamellen die Anzahl der Strömungskanäle in der Praxis z.B. 250 bis 4000 pro m² Querschnittsfläche betragen. Die Anzahl der Packungskörper des Feinverteilers hängt von der Anzahl von Aufgabestellen durch den Flüssigkeitsverteiler oberhalb der Packungskörperschicht ab. So brauchte es in einem Versuch mit Packungskörpern, die ca. 2700 Kanäle pro m² Querschnittsfläche aufweisen, mit einem Vorverteiler mit 400 Aufgabestellen pro m² drei bis vier Packungskörper, um eine gleichmässige Flüssigkeitsverteilung auf der Oberseite des Austauschteils der Kolonne zu erhalten, mit einer den Strömungskanälen der Austauschpackung entsprechenden Zahl der Teilströme. Also wird ein jeder Flüssigkeitsstrom einmal in jedem Packungskörper aufgespalten. Für den vorstehend beschriebenen Verteiler spalten sich 400 Ströme in dem ersten Packungskörper in 800 Ströme und darauf in dem zweiten Packungskörper in 1600 und in dem dritten Packungskörper in 3200 auf.

Um eventuell auftretende Abweichungen von einer jeweiligen idealen Aufspaltung in zwei Ströme zu erfassen, empfiehlt es sich, noch einen oder zwei zusätzliche Packungskörper im Verteiler anzuordnen.

Aus vorstehendem Sachverhalt geht hervor, dass die erforderliche Anzahl von Aufgabestellen im Vorverteiler umgekehrt proportional zu der Anzahl von Packungskörpern ist. Ueberraschend hierbei ist, dass diese Auffächerung im Prinzip nichts mit der Höhe der einzelnen Packungskörper zu tun hat. Der Abstand zwischen den Teilströmen ist jedoch von der Geometrie und somit auch von der Höhe der Packungskörper abhängig. Wollte man beispielsweise die Aufgabestellen des Verteilers im vorstehenden Experiment von 400 auf 40 pro m² Querschnittsfläche reduzieren, so benötigte man anstelle einer Schicht von drei Packungskörpern sechs bis sieben Packungskörper. Somit verdoppelt sich allenfalls die beanspruchte Höhe für den Feinverteiler der Flüssigkeit bei Reduzierung der Aufgabestellen um den Faktor 10.

Die Erfindung wird im folgenden anhand eines Ausführungsbeispiels beschrieben.

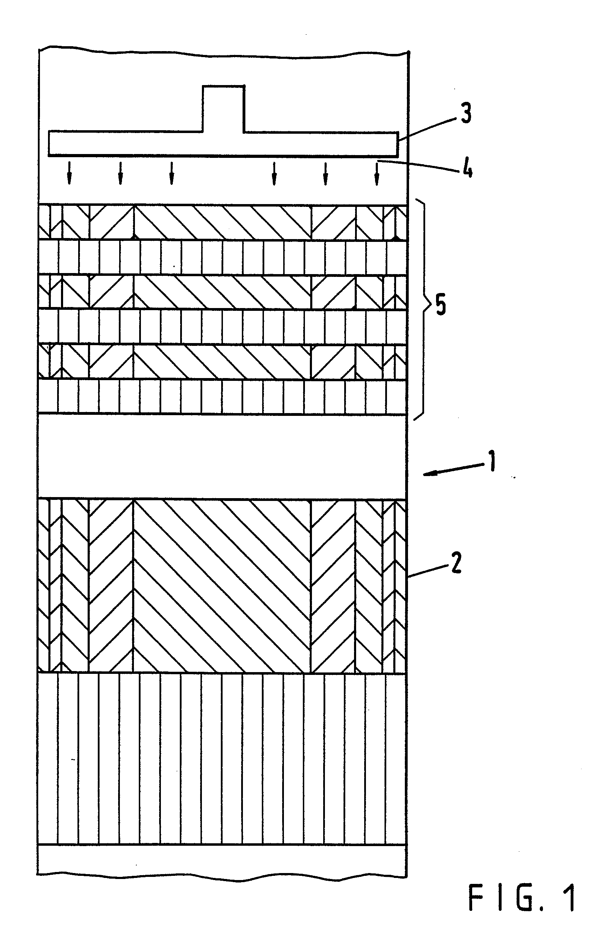

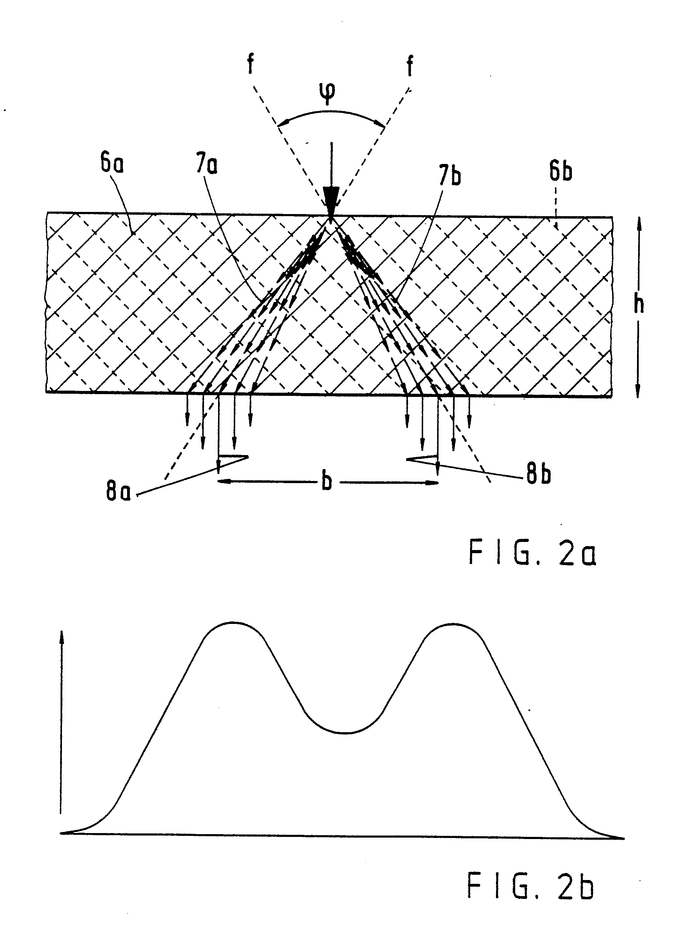

Die Fig. 1 zeigt in schematischer Darstellungsweise einen Teil eines Längsschnittes durch eine Kolonne und Fig. 2a und 2b einen Teilausschnitt durch einen Verteiler-Packungskörper mit zugehörigem Diagramm.

Kolonne 1 weist einen Austauschteil 2 mit übereinander angeordneten Packungskörpern auf. Anstelle dieser Packungskörper könnte der Austauschteil auch aus einer Schüttung von Füllkörpern, beispielsweise aus Ringen oder Sätteln bestehen.

Im oberen Teil der Kolonne 1 ist ein Flüssigkeits-Vorverteiler 3, z.B. ein Kastenverteiler mit Aufgabestellen 4 angeordnet.

Der darunterliegende Feinverteiler besteht aus einer Schicht 5 mit Packungskörpern geordneter Struktur, wobei jeweils zwei übereinander angeordnete Packungskörper um 90° gegeneinander verdreht sind.

Die Höhe und Anzahl der einzelnen Verteiler-Packungskörper berechnet sich aus gegebener Grobverteilung, gewünschter Feinverteilung und der geometrischen Struktur der Packungskörper, insbesondere dem Winkel der Fallinien.

Soll zum Beispiel die Anzahl der Teilströme gegenüber der Vorverteilung um den Faktor 4 erhöht werden und unter der Annahme einer quadratischen Vorverteilung müssen zwei um 90° verdrehte Packungskörper eingesetzt werden. Soll die Feinverteilung wiederum quadratisch (Kantenlänge b) sein, so bemisst sich die Höhe h der Packungskörper wie folgt:

$$h = \frac{b}{2} \frac{1}{\operatorname{tg} \varphi/2}$$

wobei $\varphi$ der Winkel zwischen den Hauptströmungsrichtungen der Teilströme ist.

Für noch feinere Verteilungen ist es besonders vorteilhaft, wenn die Höhe jeweils eines Paares von Packungskörpern entsprechend einer geometrischen Reihe abnimmt, wobei sich die Höhe des obersten Paares gemäss obiger Gleichung berechnet.

In Fig. 2a sind schematisch zwei Lamellen 6a und 6b eines Verteiler-Packungskörpers dargestellt mit einer Flüssigkeitsaufgabestelle 7. Der Flüssigkeitsstrom spaltet sich in zwei Teilströme 7a und 7b auf, die im wesentlichen längs der Fallinien f der entsprechenden Lamellen 6a und 6b nach unten fliessen. In Fig. 2b ist das experimentell ermittelte Ergebnis hinsichtlich der austretenden Flüssigkeitsmengen 8a und 8b dargestellt.

Es ist auch möglich, anstelle eines Feinverteilers aus Packungskörpern mit geordneter Struktur, die Füllkörperschicht als regellose Schüttung auszubilden. Um ein vorzeitiges Fluten der Kolonne zu verhindern, verwendet man vorteilhaft Füllkörper, deren Kapazität mindestens so gross ist, wie diejenige der Füllkörper im Austauschteil der Kolonne.

## Ansprüche

1. Vorrichtung zur Flüssigkeitsverteilung für Stoff-und Wärmeaustauschkolonnen, deren Austauschteil aus geordneten Füllkörpern oder regellosen Schüttungen von solchen besteht, dadurch **gekennzeichnet**, dass die Vorrichtung aus der Kombination eines Flüssigkeitsverteilers mit Austrittsöffnungen für die zu verteilende Flüssigkeit und einer darunterliegenden Schicht aus Füllkörpern für eine Feinverteilung besteht, wobei die Füllkörper eine seitliche Ausbreitung der Flüssigkeit bewirken, und wobei weiterhin die Kapazität der Füllkörper hinsichtlich der Gas-und Flüssigkeitsströmung mindestens so gross ist wie diejenige der Füllkörper des Austauschteils.

2. Vorrichtung nach Anspruch 1, dadurch gekennzeichnet, dass die Füllkörperschicht aus Packungskörpern mit einer geordneten Struktur gebildet ist.

3. Vorrichtung nach Anspruch 2, dadurch gekennzeichnet, dass die Füllkörperschicht aus mindestens zwei Packungskörpern besteht, welche Lamellen mit sich im wesentlichen in Längsrichtung der Kolonne erstreckenden, geradlinigen Strömungskanälen aufweisen, wobei die Strömungskanäle in jeder Lamelle mindestens gruppenweise im wesentlichen gleichgerichtet zueinander verlaufen, und dass weiterhin die Strömungskanäle benachbarter Lamellen sich kreuzen und aufeinanderfolgende Packungskörper um einen Winkel von ca. 90° um die Kolonnenachse verdreht sind.

4. Vorrichtung nach Anspruch 2 oder 3, dadurch gekennzeichnet, dass die Höhe von jeweils zwei Packungskörpern gleich ist.

5. Vorrichtung nach Anspruch 4, dadurch gekennzeichnet, dass die Höhe von jeweils einem Paar von Packungs körpern entsprechend einer geometrischen Reihe abnimmt.

6. Vorrichtung zur Flüssigkeitsverteilung in Stoff-und Wärmeaustauschkolonnen, deren Austauschteil aus Packungskörpern mit einer geordneten Struktur ausgebildet ist nach Anspruch 3, dadurch gekennzeichnet, dass die Packungskörper eine geringere Höhe als die Packungskörper im Austauschteil aufweisen.

7. Vorrichtung nach Anspruch 5, dadurch gekennzeichnet, dass die Höhe h der Packungskörper entsprechend der Gleichung

$$h = \frac{b}{2} \frac{1}{\operatorname{tg} \varphi/2}$$

bemessen ist.

8. Vorrichtung nach Anspruch 1, dadurch gekennzeichnet, dass die Füllkörperschicht als regellose Schüttung ausgebildet ist.

9. Vorrichtung nach Anspruch 1, dadurch gekennzeichnet, dass ein gravimetrischer Flüssigkeitsverteiler angeordnet ist.

10. Vorrichtung nach Anspruch 1, dadurch gekennzeichnet, dass ein unter erhöhtem Druck betriebener Flüssigkeitsverteiler angeordnet ist.

11. Vorrichtung nach Anspruch 10, dadurch gekennzeichnet, dass in den Austrittsöffnungen Sprühdüsen eingesetzt sind.

F I G. 1

F I G. 2a

F I G. 2b

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DERWENT JAPANESE PATENTS REPORT, Band 79, Nr. 45, Teil: Chemical Engineering, Seite 2; & JP-A-79 035 876 (GLITSCH INC.) 06-11-1979 * Zusammenfa * --- | 1,2 | B 01 D 53/18 B 01 D 3/00 |
| X | US-A-2 490 080 (F.L. MELVILL) * Spalte 4, Zeile 17 - Spalte 5, Zeile 47; Figuren 1-5 * --- | 1-4,6, 10,11 | |
| X | GB-A- 498 774 (H. BRUNE) * Insgesamt * --- | 1,8,10 | |
| A | EP-A-0 069 241 (KÜHNI AG) ----- | | |
| | | | **RECHERCHIERTE SACHGEBIETE (Int. Cl.4)** B 01 D 53/00 B 01 D 3/00 F 28 F 25/00 |

Der vorliegende Recherchenbericht wurde für alle Patentansprüche erstellt

| Recherchenort | Abschlußdatum der Recherche | Prüfer |
|---|---|---|
| DEN HAAG | 20-01-1988 | POLESAK, H.F. |